# EUROPEAN PATENT APPLICATION

(11) **EP 4 625 396 A1**
(43) Date of publication of application: **01.10.2025**
(21) Application number: 24166300.4
(22) Date of filing: 26.03.2024
(51) Int. Cl.: G09B 23/28, G09B 23/30

(54) **SURGICAL SIMULATION DEVICE**

(71) Applicant: ZuriMED Technologies AG, 8008 Zürich (CH)
(72) Inventor: CRAMER DOIG, Esteban Diego, 8008 Zürich (CH); BRUN, Sascha, 8008 Zürich (CH); SENN, Ronja, 8008 Zürich (CH); MÖHL, Andrea, 8008 Zürich (CH); BACHMANN, Elias, 8049 Zürich (CH); LI, Xiang, 8610 Uster (CH)
(74) Representative: Vossius & Partner Patentanwälte Rechtsanwälte mbB

(57) **Abstract**

The present invention relates to a surgical simulation device (1) for an arthroscopic shoulder operation. The device comprises a housing (11). The housing (11) defines a cavity (15), which is watertight and comprises one or more portal openings (23) for accessing the inside of the cavity (15) arthroscopically. The device comprises a bone holder (40) configured to fixate a shoulder bone in the cavity (15) and a tendon holder (50) for fixating an end of the tendon to the housing (11). The tendon holder (50) comprises a releasable tendon clamp (51) for holding a tendon.

## Description

The present invention relates to a surgical simulation device.

Presently, human cadavers are used for advanced internal testing of medical devices, studies for e.g. FDA approval of medical devices as well as training. However, using human cadavers has significant drawbacks. Apart from ethical issues, human cadavers are difficult to obtain, are expensive or unavailable and include a large divergence in anatomy. Thus, it would be advantageous to have standardized synthetic alternatives that allow simulating an operation.

Particular examples of this are testing, studies and training for rotator cuff repair in an arthroscopic operation (although other examples are not excluded). A human shoulder includes three bones-the clavicle (collar bone), the scapula (shoulder blade), and the humerus (upper arm bone)-and two joints. The joints are the acromioclavicular (AC) joint and the glenohumeral joint, which is the traditional "ball-and-socket." The bones of the shoulder are held together by muscles, tendons (attach muscles to bones), and ligaments (attach bones to bones). The "rotator cuff" is used to describe the group of muscles and their tendons in the shoulder that hold the "ball" (the humeral head) in the "socket" (the glenoid) and helps control the shoulder joint motion. The muscles-supraspinatus at the top (superior) of the shoulder, subscapularis in the front (anterior), infraspinatus and teres minor behind (posterior)- insert or attach to the humeral head by way of their tendons. These muscles help keep the ball centered within the socket. Above the rotator cuff is a bony projection from the scapula (shoulder blade) called the acromion. The acromion forms the ceiling of the shoulder, serves as the point of origin for the deltoid muscle, and joins the clavicle (collarbone) to form the acromioclavicular (AC) joint. Between the rotator cuff tendons and the acromion is a protective fluid-filled sack called "bursa".

Other terms used in describing the anatomy of a shoulder are: "capsule" (a pocket that provides stability); and "labrum" (a rim of cartilage to which the capsule attaches). Tears may be located either superior or inferior to the middle of the glenoid socket. A superior labrum anterior posterior (SLAP) lesion is a tear of the rim above the middle of the socket that may also involve the biceps tendon. A Bankart lesion is a tear of the rim below the middle of the glenoid socket that also involves the inferior glenohumeral ligament. Typically, rotator cuff tears occur in the supraspinatus tendon but other muscles-subscapularis, infraspinatus, and teres minor-may also be involved. The anatomy of a shoulder joint can be divided into six regions for arthroscopic repair: anterior (nose-end), posterior (tail-end), superior (head-end), inferior (feet-end), medial (towards the middle of the body), and lateral (away from the middle of the body). The posterolateral portal is commonly used as the viewing portal in arthroscopic rotator cuff repair, as it may allow for good visualization and orientation.

Generally, arthroscopic procedures are tested and trained on cadaver specimens. In many instances, however, cadaver specimens may be unavailable, associated with ethical issues, costly or even undesirable as a biohazard. Further, the anatomy varies widely between cadaver specimens. Training on a single cadaver may not be sufficiently representative of an average human and training on several or even hundreds of cadavers is not possible. Thus, there is a need for a shoulder model that enables a surgeon to practice arthroscopic procedures, to perform the procedure with repeatability by placing arthroscopic cannulas, and to use in lieu of cadaver specimens. There is also a need for a shoulder model that replicates the features of a human shoulder and can be easily transported, assembled, and refurbished. Further it would be advantageous to have a shoulder model that can simulate different human anatomies.

Simulation devices for rotator cuff repair that are currently available on the market (e.g. the Alex III Shoulder Professor, Pacific Research Labs or the VirtaMed ArthroS, VirtaMed Inc.) simulate the rotator cuff repair in a dry environment with purely synthetic or virtual features. Further, such a dry environment does not fully reflect the conditions during arthroscopy, i.e. crucial parts of handling and procedure are not trained.

The present invention is directed at overcoming one or more of the above disadvantages, in particular in arthroscopic operations. In particular, the present invention is directed at providing a surgical simulation device that is at least one of: easy to use, close to real surgery, standardized, low-maintenance, inexpensive to make, flexibly adjustable, and ethically less objectionable.

A first aspect of the present invention relates to a surgical simulation device for an arthroscopic shoulder operation. Though the present invention is described in terms of a device for arthroscopic shoulder operations, it should be noted that the present device can also be used or adapted to the simulation of other parts of a human or animal body, in particular in arthroscopic operations. Other example operations are knee operations, hip operations or any other suitable arthroscopic operation. The device comprises a housing. The housing defines a cavity. The cavity is watertight. The housing may comprise one or more openings for portals (also portal openings herein) for accessing the inside of the cavity arthroscopically.

The one or more portals may form a channel, and an elastic insert may be held in the channel.

The portals may comprise an insert for receiving the portal. The insert may be made of or comprise foam or another elastic material, for example an elastomer, e.g. the insert may be at least more elastic than the housing. The insert may be a tube. The insert may have a tubular shape and may have a wall thickness between 2 to 10 mm, preferably 4 to 8 mm. A particularly preferred tube has a wall thickness of about 6 mm. The insert may facilitate insertion of a cannula and may simulate the elastic response of tissue during an arthroscopic operation.

The housing is preferably a rigid housing, may comprise or be made of plastic, and may enclose the cavity fully (apart from the portal openings). The housing may be partially or fully transparent. The cavity may be sized to receive a human shoulder in the cavity. The cavity may have a cylindrical, spherical, semi-spherical, or cuboid shape. In particular, the housing forming the cavity may mimic an outer shape of a human shoulder.

The cavity may form a volume that can be filled with liquid and that is configured to encompass anatomical parts (e.g. all anatomical parts) of a shoulder joint as described above and below.

The portal openings may (e.g., only) be arranged in a top portion of the device. A base of the device may not comprise openings. For example, the portal openings may be arranged in an upper half, third or quarter of the device.

The device may comprise a bone holder configured to fixate a shoulder bone in the cavity. The bone holder may fixate the shoulder bone with a form or friction fit as will be described below. The bone holder may be attached to or be part of a base as described below. The bone holder may comprise a sleeve portion configured to surround a part of the bone. The bone holder may clamp the bone. The bone holder may include one or more screws configured to fixate the bone in a set position.

The device may comprise a tendon holder for fixating an end of the tendon to the housing. The tendon holder comprises a releasable clamp for holding a tendon. The clamp may be biased towards the closed position. The clamp may comprise an elastic element (e.g. a spring) that biases the clamp towards the closed position. Thereby, it is ensured that the tendon is not inadvertently released during operation simulation.

The clamp may include one, two or more gripping surfaces for manual actuation of the clamp. A compression of the clamp may be configured to release a tendon held by the clamp. Thereby, as a default, the tendon is held securely preventing inadvertent release of the tendon.

The clamping surfaces may be arranged between two or more of the gripping surfaces, which may provide for a compact design.

The presently disclosed device allows for an accurate simulation of an arthroscopic shoulder repair. In particular, the device, i.e. the cavity of the device, may be filled with a liquid, e.g. a NaCl-water solution (a saline solution), which leads to operating conditions that are closer to a real surgery than the known devices. Further, the claimed device may include a bone holder. Thus, the tendon can be arranged similarly to its actual position in the shoulder. In particular, the tendon may be attached to the tendon holder and a shoulder bone that is held in the bone holder.

In particular, the present device is directed at simulating a repair of a tendon in the shoulder. The clamp of the tendon holder enables a quick release and exchange of the tendon for a further simulation of an operation.

Preferably, the device additionally comprises a liquid container. The liquid container is fluidly connected to a liquid inlet of the housing. The liquid container allows removing a liquid from the housing and/or providing liquid to the cavity. At the same time, the liquid may also be cleaned and may be transported to the housing again for a second operation after an exchange of a tendon or on the same tendon. Further, the liquid may be circulated between the cavity and the liquid container.

Preferably, the device comprises a pump for pumping liquid into the housing. Thereby, the cavity can be refilled with liquid prior to a simulated operation. In some examples, the pump may additionally or alternatively remove liquid from the housing, e.g. after a simulated operation.

Further, the device may be configured to circulate a liquid in the cavity. For example, the pump may be fluidly connected to an inlet of the cavity and/or fluidly connected to an outlet of the cavity. For example, during arthroscopy, the fluid in the cavity and around the surgical site (in the joint), i.e. in the cavity, may be circulated. This circulation may be induced by the pump which is configured to pump clean fluid into the surgical site and configured to pump dirty fluid out of the surgical site. The pump may additionally or alternatively be connected or connectable to an arthroscope (e.g. an arthroscopic lens). In arthroscopy, saline solution is pumped through an arthroscope for observing the (simulated) operation. A flow sheath may connect the pump and cavity fluidly. The flow sheath may be attached to an arthroscope lens. The fluid may flow through this sheath.

Preferably, the device comprises a liquid level sensor configured to sense a level of liquid in the housing. The device may also comprise a pump controller configured to control the level of liquid in the housing based on a signal of the liquid level sensor. Thereby, the amount of liquid in the cavity may be controlled.

Preferably, the cavity is configured to hold a liquid. In some examples, the cavity may hold liquid. The liquid may include water and is preferably a saline solution. Thereby, the operation can be accurately simulated.

The portal openings may have an inner diameter of 50 mm, 40 mm, 30 mm or less. The openings may have an inner diameter of 5 mm, 15 mm, 18 mm, 20 mm or more. Preferably, the inner diameter is about 25 mm. These measurements may refer the portal openings without the elastic insert.

The portal openings may have an inner diameter of 40 mm, 30 mm, 28 mm, or less. The openings may have an inner diameter of 8 mm, 10 mm, 12 mm or more. Preferably, the inner diameter is about 13 mm. These measurements may refer the portal openings with the elastic insert.

The portals may be configured to receive a cannula. Additionally, the device may also comprise cannulas which are held in the portal openings. Preferably, the one or more portals may be configured to hold a cannula and may each include a cannula. The portal openings for the cannulas may be movable.

Suitable cannulas for the portal opening are commercially available, e.g. PassPort Button Cannula, 10 mm ID x 3 cm, manufactured by Arthrex Inc.

The portals may be round. The portals may include walls and/or may extend from the housing into the cavity and/or exterior to the housing. The portals may thereby form longitudinally extending channels and provide support similar to surrounding tissue.

In some examples, the portals may simply be a, e.g. circular, opening in the housing into which the cannula can be inserted. In other preferred examples, the portal may include an insert. The portal may include a movable opening. In one example, the portals could be held rotatably in the housing or comprise rotatable parts. The portal may include an off-center opening, e.g. a circular off-center opening. A rotation of the portal would result in a displacement of the opening (e.g. a rotation around a center axis of the portal) and thus of the access point. In another example, the opening may be slideable or the portal may be removable. Thus, portals with openings in different locations may be connected to the housing.

A movable opening allows a surgeon to choose the access point. Depending on the simulated surgery and the simulated damage to the tendon, a surgeon may want to access the tendon from different angles or may want to train access from different angles.

Preferably, the housing includes a base and a top. The base and the top form the cavity. The base and the top are preferably rotatably connected with each other via a hinge. This allows for an easy access to the tendon and a quick replacement of the tendon before or after a simulation of an operation.

The base may be cup-shaped. The top may also be cup-shaped. In one example, the top, but not the base, may comprise the portals. The base may include the bone holder. The base may include the tendon holder. The top may surround the tendon holder in the closed position.

The base and/or the top may be integrally formed. For example, the base and/or the top may be manufactured using 3D printing or injection molding.

Preferably, the base and the top have a closed housing configuration for simulating the arthroscopic operation and open housing configuration for directly accessing the tendon and the bone. The base and the top form a (e.g. liquid-tight) seal when connected in the closed housing configuration.

Preferably, the clamp comprises a first portion and a second portion. The first portion may include a first clamping surface. The second portion may include a second clamping surface. The first and the second portions may be movable with respect to each other. The spring biases the first clamping surface towards the second clamp surface such that the tendon is grasped between the first and the second clamping surfaces.

Preferably, the first portion comprises first guiding surfaces. The second portion may include second guiding surfaces. The first portion and the second portion are configured to move relatively to each other along the guiding surfaces. The motion may be a linear motion. The first and second portions may include an opening for insertion of the tendon. The opening may be defined between the first and second clamping surfaces.

Preferably, the device additionally comprises a tendon. The tendon may be an artificial or natural tendon. In some examples, the tendon may be a natural cadaveric animal or human tendon. The artificial tendon may be made of gelatin or silicone. The artificial tendon may be reinforced with a textile mesh. This results in advantageous mechanical and haptic properties as it is squishy but stiff in the direction of pull of the simulated tendon.

The bone and/or tendon may be natural bones and tendons, e.g. parts of cadavers (such as the supraspinatus tendon). The cadavers may be human or animal (e.g. bovine) or completely represent the anatomy by models.

Preferably, the tendon holder is movably arranged within the housing. For example, the tendon holder may be held rotatably within the housing. The surgical simulation device may comprise a tendon holder spring, preferably a torsion spring, for biasing the tendon holder in a direction away from the shoulder bone. For example, the tendon holder may be configured to rotate around an axis. Thereby, the tendon holder can be moved towards the bone during attachment of the tendon, and, after attachment of the tendon, the end of the tendon fixated in the tendon holder is moved away from the bone by the tendon holder spring. Thereby, a tendon attached to the bone and the tendon holder can be stressed or tensioned. This arrangement allows for a more accurate representation of the conditions of a tendon in a living human in which the tendon may be under some mechanical stress.

Preferably, the tendon holder spring connects the housing and the tendon holder. Preferably, the tendon holder spring may be between a stand for the tendon holder and the tendon holder.

Preferably, the device comprises a fluid outlet. The fluid outlet may comprise a closure member. The closure member includes a first end with a sealing plate and a second end with a manual gripping portion. A pivot may be between the first end and the second end. The closure member may be configured to be rotated from a sealing position to an open position by pivoting the closure member around the pivot. Thereby, a valve is formed that allows a quick release of the water in the cavity.

Preferably, the housing comprises an optically transparent portion. This allows observing the simulation of the operation. For example, the base or the top portion may be optically transparent. In other examples, a front side or a back side of the housing may be optically transparent. Preferably, a backside of the housing may be optically transparent. The terms front and back as used herein referred to the sides of the simulation device as seen from the perspective of a user of the device. For example, the portal openings may be arranged on the front side and first and second sides. In an example, there may be no portal opening on the backside.

Preferably, the housing comprises a work surface fixation. Preferably, the housing may comprise one or more suction cups, a C-clamp, or a height adjustable stand. For example, the height adjustable stand may be a metal height adjustable stand. The device may also include a basin. The basin may be configured to collect liquid from the cavity. Thereby, the device may be mounted on a table.

Preferably, the device comprises a shoulder bone. The shoulder bone may be fixated in the bone holder. The shoulder bone may be artificial or natural. The shoulder bone is preferably a humerus or an acromion.

Preferably, the shoulder bone is at least partially covered with a viscoelastic material. The viscoelastic material may be gelatin or silicone. Thereby, soft tissue on the bone may be mimicked which may improve haptic feedback and provide for a more realistic simulation.

Preferably, the artificial or natural bone comprises one or more holes for attaching a tendon. The holes may allow for the use of suture anchors that are typically used in surgery. However, without compromise in the simulation, other methods for attaching the tendon are comprised by the present invention.

Preferably, the device is configured for simulating a rotator cuff repair including, but not limited to, simulating the attachment of the supraspinatus tendon to the humeral head after a tear and performing reinforcement treatment after a repair of the tendon.

Preferably, the one or more portal openings are positioned relative to the bone and the tendon as one or more of: a posterior portal, an anterior portal, a lateral portal, a superolateral portal, an anterolateral portal and a posterolateral portal. The device may comprise all or some of these portals.

Preferably, a position of the tendon holder and/or the bone holder in the cavity is adjustable such that the simulated anatomy can be changed. For example, the position holder may be moved relative to the housing, e.g. by tilting, rotating or translating the tendon holder or the bone holder. Preferably, the angle at which the bone holder holds the bone may be adjustable. Thereby, different anatomies, i.e. differently sized and/or differently arranged shoulders, can be simulated.

Preferably, the device additionally comprises at least one of: an artificial or natural supraspinatus muscle and/or tendon, an artificial or natural infraspinatus muscle and/or tendon, an artificial or natural teres minor muscle and/or tendon and an artificial or natural subscapularis muscle and/or tendon.

Further, the device may comprise a second tendon clamp for holding a tendon. The second clamp may be similar or different to the releasable tendon clamp of the tendon holder (also first clamp herein).

The second clamp may comprise a first attachment interface for fixating the second clamp to the bone. For example, the second clamp may include a bone anchor, e.g. a suture anchor or other bone anchor, for example a screw or nail. Further, the second clamp may include first and second clamping surfaces configured to clamp an end of the artificial or natural tendon. The second clamp may be attached to the bone.

A further aspect of the present invention relates to a set comprising the device and a second tendon holder with a second clamp.

A further aspect of the present invention relates to a set comprising a combination of the device described above and any one or more or all of the following: the second clamp described above and below, the artificial or natural tendon described above and below, and the artificial or natural bone described above and below.

Preferred embodiments are disclosed by way of example only with respect to the following drawings:
Figure 1 shows a perspective view of a surgical simulation device according to the invention in a closed configuration.
Figure 2 shows a perspective view of the surgical simulation device of figure 1 with cannulas in portal openings
Figure 3 shows a perspective view of the surgical simulation device of figure 1 in an open configuration.
Figure 4 shows a perspective view of the surgical simulation device of figure 3 with a bone.
Figure 5A shows a tendon holder and tendon holder stand.
Figure 5B shows a schematic drawing of a tendon held in the surgical simulation device.
Figure 6A shows a perspective view of a bone holder.
Figure 6B shows a valve for opening and closing a fluid outlet of the surgical simulation device.
Figure 7 shows a schematic drawing of the tendon holder with a tendon.
Figure 8 shows a fully assembled surgical simulation device according to the invention in which a tendon is held.
Figure 9A shows a backside of the surgical simulation device according to figure 1.
Figure 9B shows a bottom side of the surgical simulation device according to figure 1.
Figure 10 shows the surgical simulation device according to figure 1 with a device stand and a basin.

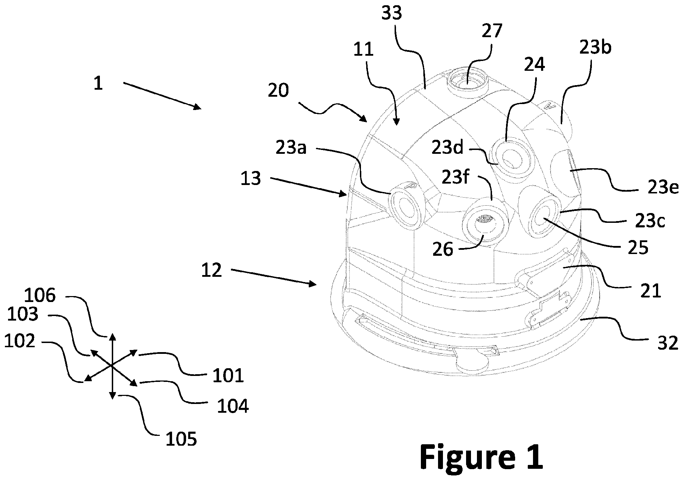

Figures 1 to 4 show a surgical simulation device 1 according to the invention. The surgical device includes a housing 11. The housing 11 roughly has the shape of a quarter sphere. In alternative examples, the housing may have the exact shape of quarter sphere. Preferably, however, the housing may mimic the shape of a human shoulder.

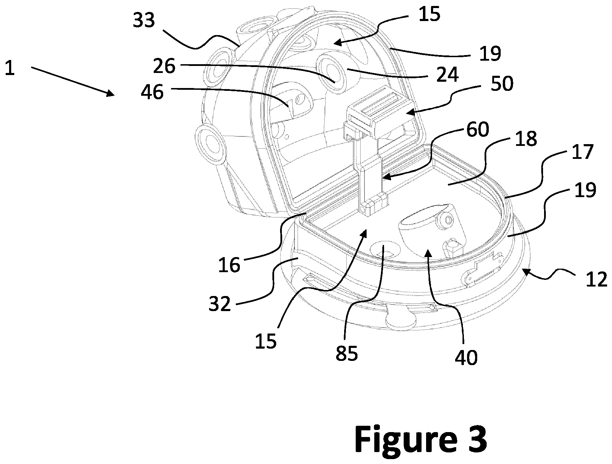

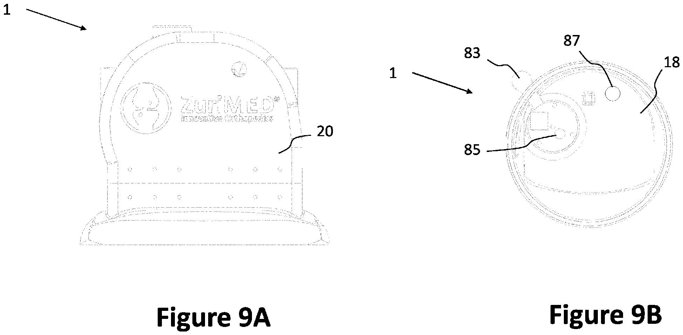

A bottom 18 of the housing may be flat and a backside 20 of the housing may also be flat (see e.g. figures 9A and 9B). A front side (as seen in figure 1) has a rounded shape. Generally, the terms front and back refer to a perspective of an operator using the device. Typically, the operator will stand in front of the device when simulating an operation. The housing 11 may have the outer shape of a portion of a human shoulder, wherein the portion may include the parts in proximity to the shoulder joint, i.e., the part of the body where a humerus attaches to the scapula. The portion may include (only) a part of the humerus, and (only) a part of the scapula including soft tissue surrounding these bones. Inside of the housing 11, a cavity 15 is formed (see figure 3). Herein, directions may be defined in terms of anatomical directions of the shoulder as indicated by arrows 101 to 106, which may indicate an anterior direction 101, a posterior direction 102, a medial (or back) direction 103), a lateral (or front) direction 104, an inferior (or bottom) direction 105, and a superior (or top) direction 106. Though these directions generally relate to a right shoulder, it should be understood that the device 1 can also simulate a left shoulder as will be described below. The directions are not intended to limit the device 1 to only one shoulder, though the device may be suitable for only one shoulder in alternative embodiments.

The housing 11 includes a base 12 (also base portion) and a top 13 (also top portion). The base 12 and top 13 include a base housing 32 and top housing 33, respectively. The base housing 32 and the top housing 33 may each (or individually) comprise or be formed by walls of a rigid material. As can be seen in figure 3, the base housing 32 and the top housing 33 are rotatably connected to each other with a hinge 16. The hinge 16 may be arranged at a back side of the housing 11 such that the base 12 and top 13 open towards the front. Top 13 and base 12 may open like a jaw. The base 12 and the top 13 may be separable along a preferably flat plane. The flat plane may extend in the anterior-posterior and medial-lateral directions. The base 12 includes the bottom 18, e.g. a bottom plate. Bottom walls 19 extend upward from the bottom 18 at an outer edge of the bottom 18 (see figure 3). The base 12 thereby forms a basin that may be a lower portion of the cavity 15. Preferably, the base 12 only includes one or more outlet and/or inlet openings for a fluid, such as a saline solution. One example is outlet opening 85 in the bottom 18 with which saline solution in the cavity 15 can be released from the cavity 15 as will be explained in greater detail below.

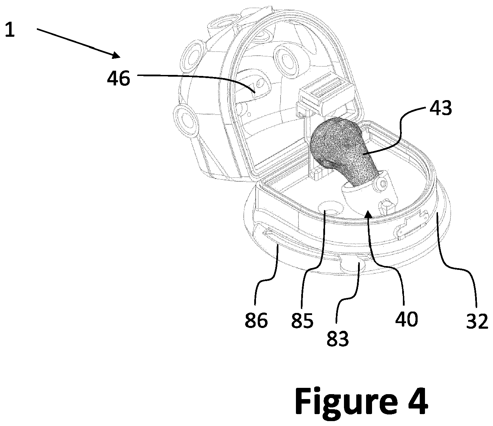

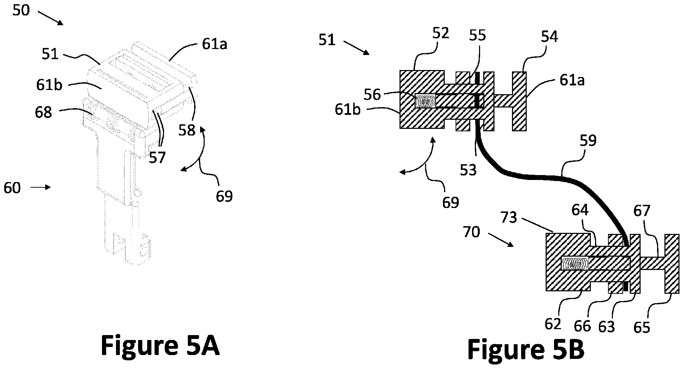

Also, the base 12 includes a bone holder 40 (see e.g. figures 3 and 4), a first tendon holder 50, and a tendon holder stand 60, (see e.g. figure 5A).

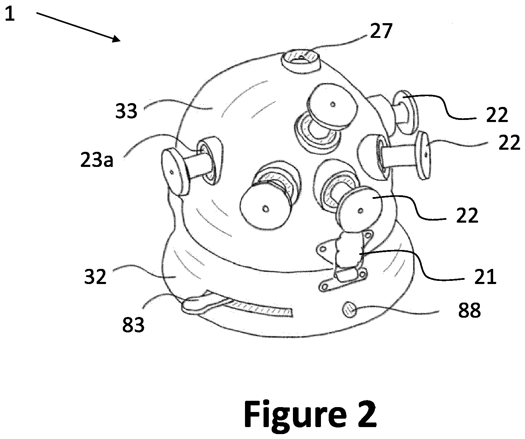

Further, the base 12 may include a hole 88 for insertion of C-clamp to fixate the device 1 (see figure 2), e.g., on a table.

The base 12 and top 13 may include a fastener 21 (see figure 2). Further, one of base 12 and top 13 (or both) may include a seal 17, such as an O-ring (D-shaped as can be seen in figure 3). The seal 17 may be made of rubber (or any other suitable material). The seal 17 may surround the cavity 15. The fastener 21 may be configured to press top 13 and base 12 against each other. For example, as shown in figure 2, the fastener 21 may be formed as a draw catch. Thereby, seal 17 may be compressed between the base 12 and the top 13 ensuring that a liquid remains in the cavity 15 during a simulation of an operation and that the cavity is liquid tight. The top 13 may include a flat or U-shaped inferior edge 19 that engages seal 17.

The top 13 has a rounded outer shape in which a plurality of portals 23a to 23f (collectively portals 23) are arranged. The portals 23 are arranged in typical arthroscopic access locations around the shoulder. Portal 23a may be a posterior portal. Portal 23b may be an anterior portal. Portal 23c may be a lateral portal. Portal 23d may be a superolateral portal. Portal 23e may be an anterolateral portal and portal 23f may be a posterolateral portal.

However, since the device 1 may be symmetric with respect to the anterior and posterior directions, the posterior and anterior directions may also be switched around. For example, portal 23a may be a posterior portal. Portal 23b may be an anterior portal. Portal 23c may be a lateral portal. Portal 23d may be a superolateral portal. Portal 23e may be an anterolateral portal and portal 23f may be a posterolateral portal. Due to the symmetry, the device 1 may be used to simulate an operation on a left shoulder and a right shoulder. Which shoulder is chosen may also depend on the orientation in which a bone and corresponding tendon 59 is fixated inside of the cavity 15.

In particular, the (e.g. posterior) portal 23a and the (e.g. anterior) portal 23b are arranged at opposing sides of the housing. The (e.g. lateral) portal 23c may be arranged in between the (e.g. posterior) portal 23a and the (e.g. anterior) portal 23b in the anterior-posterior direction and may be arranged in a lateral direction from each of the (e.g. anterior) portal 23b and the (e.g. posterior) portal 23a. The (e.g. superolateral) portal 23d may be arranged in a superior direction of the lateral portal 23c and may also be between the (e.g. posterior) portal 23a and the (e.g. anterior) portal 23b. The (e.g. posterolateral) portal 23f may be arranged between the (e.g. posterior) portal 23a and the (e.g. lateral) portal 23c. The (e.g. anterolateral) portal 23e may be arranged between the (e.g. lateral) portal 23c and the (e.g. anterior) portal 23b.

While the device may be symmetric in some embodiments, it could also by asymmetric, and e.g. only be suitable for a single shoulder (either left or right). In this case the outer shape may mimic the shape of a human shoulder more closely.

Preferably, the device 1 includes all of these portals. However, in some embodiments, the device 1 may only include a subset of these portals (e.g. two, three, four, or five of the portals). For example, the device 1 may only include portals 23a, 23b, and 23c or portals 23a, 23b, 23c, and 23d.

One of the portals, preferably each of the portals, may include one or more of the following parts: The portals 23 may include channel walls 24 (see figure 1). The channel walls 24 may be integrally formed with housing 11 or attached thereto. The channel walls 24 may form a channel 25 that may extend into the cavity 15 and/or outside of the housing 11 (see figure 1). The channel 25 may include a tubular insert 26 that extends along an axial length of the channel 25. The tubular insert 26 is made of or at least comprises an elastic material that may be configured to simulate an elastic response of soft tissue during an arthroscopic operation. The tubular insert 26 may be held in a press fit in the channel 25. In one example, the tubular insert 26 may be made of a foam, silicone, rubber, or any other suitable material that has a similar Young's modulus as soft tissue. Similar may mean a Young's modulus of between 0.1 MPa to 5 MPa. An inner pathway formed by the tubular insert 26 may have a width or diameter corresponding to the size of commercially available cannulas, e.g. cannula 22 (see figure 2). For example, the tubular inserts 26 may have an inner diameter between 5 mm and 20 mm, preferably 13 mm. The tubular inserts 26 may be attached to the channel 25. However, preferably the tubular inserts 26 are removable such that the tubular inserts 26 may be exchanged, e.g. when the tubular inserts 26 are damaged, have aged or if a different inner diameter is desired.

Preferably, the inner pathway of the tubular insert 26 is concentrical to the channel 25. However, in other embodiments the channel is arranged in an off-center location of the channel. Thereby, the position of the arthroscopic access may be varied depending on the rotational position of the tubular insert 26 allowing an operator to choose the access position more flexibly.

While the drawings show that the portals 23 and corresponding channels 25 are integrally formed with the housing 11, i.e. top 13, portals 23 may also be formed as a separate part. In this case, the portals 23 may be attached to the housing. In this case, the portals 23 may be symmetric, e.g. disc-shaped, allowing attachment of the portals in two or more positions. For example, if the portal is quadratic, it may be attached in four different positions. If the portal is circular, it may be attached and/or fixated in any rotational position. It may be advantageous if channel 25 (or at least an opening for arthroscopic access) is arranged in an off-center position of the separately formed portal. In this manner, each position, in which the portal 23 may be attached to the housing 11, forms a further option for a position of an arthroscopic access. Thereby, different scenarios can be simulated and/or an operator may choose preferred access locations. Further, portals 23 may easily be replaced with minimal waste after use. For example, only inserts 26 or only portals 23 or inserts 26 and portals 23 may be jointly replaced.

As can be seen in figure 2, each of the portals 23 is closed by a cannula 22. Cannulas 22 may be cannulas that are typically used during an arthroscopic operation. Example cannulas 22 are commericially avaible Athrex' PassPort Button^{™} Cannulas.

The housing 11, i.e. base 12 and/or top 13, may be made of a rigid material, e.g. a rigid plastic material. The housing 11 is thus durable and can frequently be reused.

The top 13 further includes an inlet for the fluid, i.e. saline solution. In the shown example, the inlet is formed by superior opening 27 (see figure 1), though the inlet may also be arranged in any other position, e.g. in the base 12, for example in the bottom 18. The superior opening 27 is preferably arranged at a superior end of the device 1. Further, a superior portion of the top 13 may additionally include an air outlet such that air can leave the cavity 15 when the cavity 15 is filled with liquid. The air outlet may be arranged adjacent to the superior opening 27 or may be formed by the superior opening 27.

The top 13 may include a natural or artificial acromion 46 (see figures 3 and 4). The acromion is fixed in the cavity to an inner wall of the top housing 33 (see figure 3). When the housing is closed, the acromion 46 and a humerus 43 (see figure 4) are arranged in close proximity replicating a human shoulder joint. In alternative embodiments, the acromion 46 is integrally formed with the housing 11. Preferably, the acromion 46 is removable and can be fixed to the housing 11 using e.g. screws. Thereby, the acromion 46 may be replaced, e.g. for simulating different acromion sizes. Preferably, a position of acromion 46 may be adjustable to simulate different shoulder geometries. The acromion may be an artificial or natural bone. Preferably, the acromion may be 3D-printed.

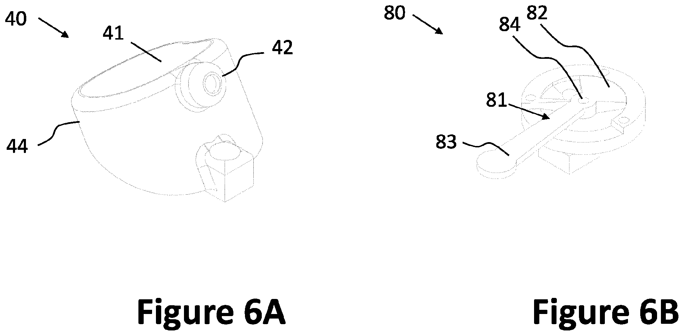

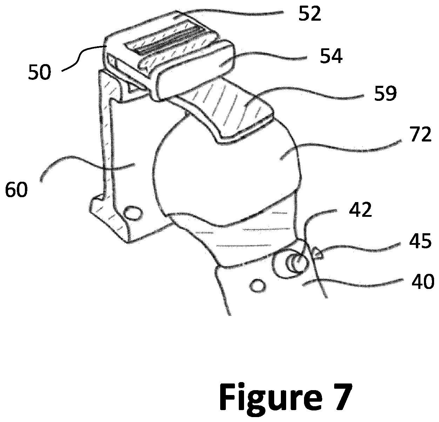

The bone holder 40 (see figures 3, 4, and 6A) is arranged on the bottom 18 and within cavity 15. The bone holder 40 may be arranged in a central position on the bottom 18. The bone holder 40 extends from the bottom 18 and may form a receptacle 41 for a portion of a bone. The receptacle 41 may be formed as an open-ended channel by receptacle walls 44. The receptacle 41 may include one or more fixation screws 42. The fixation screws 42 may be screwed in to fixate an end of the bone (e.g. humerus 43, see figure 4) by pressing the bone against a part of the receptacle 41 and/or against another screw. Preferably, the device 1 comprises receptacle inserts against which the bone may be pushed by the screw. For example, an outer shape of the insert may define the angle and orientation of the bone when pressed against the receptacle insert. In addition, as shown in figure 7, the bone holder 40 may comprise one, two, or more pins 45 for suture attachment.

Further, the device 1, i.e. base 12, may include the first tendon holder 50 (see figures 3, 4, and 5A). The first tendon holder 50 is mounted on the first tendon holder stand 60. The first tendon holder stand 60 extends from the bottom 18 of the base 12 (see e.g. figure 3). Preferably, the first tendon holder stand 60 is arranged at a backside of the base 12 and extends within cavity 15. The first tendon holder 50 includes a first clamp 51. The first clamp 51 (see in particular figures 5A and 5B) comprises a first clamp portion 52 and a second clamp portion 54. The first clamp portion 52 includes a first clamping surface 53 and the second clamp portion 54 includes a second clamping surface 55. In operation (see e.g. figure 5B and figure 7), the tendon 59 can be clamped between the first clamping surface 53 and the second clamping surface 55. The first clamp 51 may be understood in particular with reference to figure 5A and figure 5B. As can be seen, the first clamp portion 52 and the second clamp portion 54 move linearly with respect to each other. For this purpose, the first clamp portion 52 includes flat first guiding surfaces 57 and the second clamp portion 54 includes flat second guiding surfaces 58 (see figure 5A). These surfaces slide on one another during movement of the clamp. One or more springs 56 (i.e. compression springs), push the first clamping surface 53 in the direction of the second clamping surface 55. In order to load the clamp 51, a user may compress the spring 56 by pushing the first clamp portion 52 and the second clamp portion 54 towards each other. In operation, the spring 56 is pre-stressed such that the tendon 59 is fixated between the first clamping surface 53 and second clamping surface 55. To release the tendon 59 and/or load a further tendon, a user may grasp outer surfaces 61a and 61b and press these against each other. Thereby, a gap between the first clamping surface 53 and second clamping surface 55 opens and the tendon 59 may be loaded or released.

As can be seen e.g. in figures 5A and 5B, a part of first clamp portion 52, in particular first clamping surface 53, is surrounded by the second clamp portion 54 and/or part of second clamp portion 54, in particular second clamping surface 55, is surrounded by the first clamp portion 52. The shown mechanism is a compact clamp which allows for a quick release to exchange tendon 59 in between simulated operations.

The first clamp portion 52 may be described as two plates 62, 63 that are connected and spaced apart by one or more first support elements 64 (e.g. four bars). The second clamp portion 54 may also be described as two plates 65, 66 that are connected and spaced apart by one or more second support elements 67 (e.g. two bars). The support elements 64 of the first clamp portion 52 receive and slidingly hold the support elements 67 of the second clamp portion 54.

Further, first clamp 51 is movably, i.e. rotatably, connected to the tendon holder stand 60 as indicated by arrow 69. The first clamp 51 is shown in a first position in figures 5A and 5B. The first clamp 51 may be moved, i.e. rotated, towards the bottom 18, e.g., around an axis parallel to the bottom 18. This may be helpful to load and/or release a tendon. In addition, the device, i.e., the tendon holder stand 60, may comprise a torsion spring 68. In the simulation, the tendon 59 may be tensioned, similarly to a tendon in a human body. This tensioning may be achieved by loading the tendon 59 into the first clamp 51 in a second position of the clamp 51. The second position may be closer to the bone holder 40 than the first position. For example, the first clamp 51 may be rotated by 30°, 45°, 60° or more. The torsion spring 68 is pre-tensioned and pushes the first clamp 51 towards the first position, which tensions the tendon 59 after loading in the first clamp 51. Though the example shows a torsion spring, similar concepts may also be realized using other elastic elements.

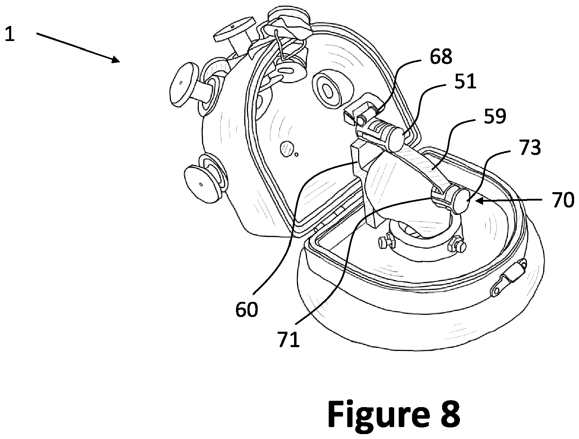

The torsion spring 68 may be arranged between the first clamp 51 and the tendon holder stand 60 as shown in figure 5A or in figure 8. Further, the first clamp 51 and/or the second clamp 73 may have a rectangular shape perpendicular to the movement of the respective clamp as shown in figure 5A or, as shown in figure 8, a round (in particular circular) shape perpendicular to the movement of the clamp.

In addition or alternatively to the first tendon holder 50 with first clamp 51, the device 1 may include a second tendon holder 70 (see e.g. figure 5B and figure 8). The second tendon holder 70 may include a second clamp 73. The second clamp 73 may be identical to the first clamp 51, i.e. the second clamp may include similar clamp portions, clamping surfaces, plates, guiding surfaces, and/or connection elements. The second clamp 73 may comprise an anchoring section 71 for anchoring the second clamp 73 in a bone (e.g. humerus 43). The anchoring section 71 may include a bone screw (not shown) or any other suitable attachment to the bone. In an alternative example, the second clamp 73 may be fixated to the bottom 18 and/or to the bone holder 40.

In one example, the simulation device may be suitable to simulate a tear in the rotator cuff. Accordingly, the positions of the first clamp 51 and the second clamp 73 may be arranged along natural positions of the tendon 59 (e.g. any of the tendons described in the introduction). In some examples, the tendon holder stand 60 may be telescopically (or otherwise) expandable and/or the position and/or form the tendon holder stand 60 may be adjustable to simulate different tendons. Similarly, the anchoring section 71 of the second clamp 73 may be attached to varying parts of the bone simulating the attachment of different tendons.

In some examples, the bone may include fixation interfaces for quick attachment and release of the anchoring sections, such as holes, mounting surfaces, etc.

The tendon 59 may have the length of a natural tendon or may only have part of the length of the natural tendon. The tendon 59 may include at least a part of a natural tendon in which tears commonly occur. For example, the tendon 59 may be arranged similarly to the supraspinatus tendon.

Figure 7 and 8 show example configurations, in which a tendon 59 is attached to the first clamp 51. As can be seen, the tendon 59 is grasped between the first clamp portion 52 and the second clamp portion 54. Figure 7 additionally illustrates that the bone (humerus 43) may additionally comprise a silicone cover 72. The silicone cover 72 may simulate tissue, e.g. cartilage tissue at the end portion of the bone. This may be particularly useful if the bone is made artificially.

Figures 1 to 4, 6B and 9B illustrate a further aspect of the surgical simulation device 1. The device 1 additionally comprises an outlet closure 80 with a closure member 81. The closure member 81 includes a first end with a sealing plate 82 and a second end with a gripping portion 83. The closure member is rotatably held by a pivot 84 in between the sealing plate 82 and the gripping portion 83 (though the positions of the sealing plate 82 and pivot 84 may also be exchanged). The base housing 32 includes a slit shaped opening 86 allowing the gripping portion 83 to be accessed by a user (see figure 4) and the closure member to rotate. By rotating the closure member 81 around pivot 84 using gripping portion 83, the sealing plate 82 can be moved from a first configuration to a second configuration. In the first configuration, the sealing plate seals outlet opening 85 (see figures 3 and 4) and liquid held within the cavity 15 cannot flow through outlet opening 85. In the second configuration the sealing plate 82 is moved away from the outlet opening 85 allowing liquid to flow through the outlet opening 85. Thereby, a user may quickly and manually remove any liquid held in the cavity 15.

Figure 9A shows a backside of the surgical simulation device 1. As can be seen and described earlier, the backside 20 is substantially flat. In some embodiments, the backside may be made of a transparent material, such as transparent plastic or glass. Thereby, the currently simulated surgery may be monitored by a second or third person. The entire housing 11 or the top 13, e.g. top housing 33, may alternatively or additionally be transparent to allow monitoring the simulated surgery.

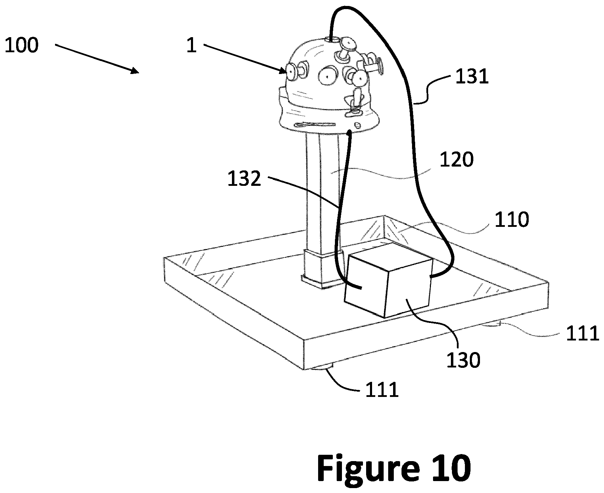

Figure 10 shows a system 100 comprising the surgical simulation device 1. Additionally, the system 100 includes a basin 110 and a stand 120. The basin 110 may include feet 111 and may be arranged below (e.g. in the direction of gravity) the surgical simulation device 1. Thereby, when e.g. the outlet opening 85 is opened, the liquid flowing out is collected. Stand 120 may be height-adjustable. The device 1 may additionally comprise a pump 130. The pump 130 may pump liquid from the basin 110 (or from elsewhere) via inlet tube 131 into the superior opening 27. After simulating an operation, the liquid may be removed using opening 85. Alternatively (or additionally), the bottom 18 may comprise a second opening 87 (see figure 9B) and the pump 130 may be connected to the second opening 87 (or alternatively the opening 85) via outlet tube 132. The pump 130 and/or the device 1 may comprise a liquid level sensor. For example, the liquid level sensor may be inside the cavity 15 or in the pump 130. The liquid level sensor may be a pressure sensor. Thereby, the amount of liquid in the cavity 15 may be determined. For example, prior to a simulated surgery, the pump 130 may be activated and transport liquid into the cavity. If the cavity is sufficiently filled with liquid, e.g. at least tendon 59 is fully immersed in liquid, the pump 130 may stop transporting liquid, e.g. from basin 110, into the cavity 15. Preferably, the pump 130 fills the entire cavity 15 with liquid.

In the following, one example use of the above device and system is described.

The simulated surgery may be prepared in an open configuration of the device 1 (see e.g. figures 3 and 4). Prior to the simulated surgery, a user may obtain an artificial or natural tendon 59 and an artificial or natural part of a human humerus 43. The humerus 43 may be fixated in the bone holder 40. The humerus 43 may already include the second tendon holder 70 with second clamp 73. If not, the user may attach the second tendon holder 70 to the humerus 43 as shown in figure 8. Thereafter, a user may clamp a second end of tendon 59 with the second clamp 73 and a first end of tendon 59 with the first clamp 51 (see e.g. figures 5B and 8). During clamping, the first tendon holder 50 may be moved against (e.g. torsional) spring 68. After clamping both ends of the tendon 59, the first tendon holder 50 may be released, tensioning the tendon 59. Preparation may also include inserting cannulas 22 into the portals 23.

After preparation, the housing 11 may be closed (see e.g. figures 1 and 2). The pump 130 may be activated and fill the cavity 15 with liquid, i.e. saline solution, e.g. until the liquid level sensor detects that a desired filling is achieved. E.g., the cavity 15 may be fully filled with saline solution.

Then, a shoulder surgery may be simulated. As during clinical shoulder surgeries, the pump 130 may continuously pump liquid into the cavity 15. After surgery, the liquid may be removed using outlet closure 80 or using pump 130. Then, the housing 11 may be opened and the results may be quickly evaluated. Further, tendon 59 may be quickly released and replaced using first clamp 51, and second clamp 73. Thus, an easy and quick to use device is provided without any loss in an accuracy of the simulation.

Further aspects of the present invention relate to the following:
1. Surgical simulation device (1) for an arthroscopic shoulder operation comprising:
   a housing (11), the housing (11) defining a cavity (15), wherein the cavity (15) is watertight, and the housing (11) comprising one or more portal openings for accessing the inside of the cavity (15) arthroscopically;
   a bone holder (40) configured to fixate a shoulder bone in the cavity (15); and
   a tendon holder for fixating an end of the tendon to the housing (11), wherein the tendon holder comprises a releasable tendon clamp for holding a tendon.
2. Surgical simulation device (1) according to aspect 1, wherein the device additionally comprises a liquid container, the liquid container being fluidly connected to a liquid inlet of the housing (11).
3. Surgical simulation device (1) according to one of the preceding aspects, wherein the device comprises a pump (130) for pumping liquid into the housing (11).
4. Surgical simulation device according to aspect 3, comprising a liquid level sensor configured to sense a level of the liquid in the housing (11) and preferably a pump controller configured to control the level of the liquid in the housing (11).
5. Surgical simulation device (1) according to one of the preceding aspects, wherein the cavity (15) holds a liquid, wherein the liquid includes water and is preferably a saline solution.
6. Surgical simulation device (1) according to one of the preceding aspects, wherein the device comprises one or more portals (23a-f) and wherein the one or more portals (23a-f) preferably each include a cannula (22).
7. Surgical simulation device (1) according to aspect 6, wherein one or more of the portals (23a-f) include a movable portal opening.
8. Surgical simulation device (1) according to one of the preceding aspects, wherein the housing (11) includes a base (12) and a top (13) that form the cavity (15), wherein the base (12) and top (13) are preferably rotatably connected with each other via a hinge (16).
9. Surgical simulation device (1) according to the preceding aspect, wherein the base (12) and the top (13) have a closed housing configuration for simulating the arthroscopic shoulder operation and an open housing configuration for directly accessing the tendon (59) and the bone, wherein the base (12) and the top (13) are connected in the closed housing position, forming a tight seal.
10. Surgical simulation device (1) according to one of the preceding aspects, further comprising a spring (56) that biases the clamp (51) towards a closed clamp position.
11. Surgical simulation device (1) according to aspect 10, wherein the clamp (51) comprises a first portion and a second portion,
   the first portion including a first clamping surface (53);
   the second portion including a second clamping surface (55)
   the first and second portions being movable with respect to each other; and
   wherein the spring (56) biases the first clamping surface (53) towards the second clamping surface (55) such that the tendon (59) is grasped between the first and the second clamping surface (53, 55).
12. Surgical simulation device (1) according to the preceding aspect, wherein the first portion comprises first guiding surfaces (57) and the second portion includes second guiding surfaces (58), and wherein the first portion and the second portion are configured to move relatively to each other along the guiding surfaces (57, 58), preferably in a linear motion.
13. Surgical simulation device (1) according to one of the preceding aspects, additionally comprising a tendon (59), wherein the tendon (59) is an artificial or natural tendon, in particular a natural cadaveric animal or human tendon (59), wherein the artificial tendon is preferably made of gelatin or silicone that is reinforced with a textile mesh.
14. Surgical simulation device (1) according to one of the preceding aspects, wherein the tendon holder (50) is movably arranged within the housing (11) and wherein the surgical simulation device (1) comprises a tendon holder spring, preferably a torsion spring (68), for biasing the tendon holder (50) in a direction away from the shoulder bone.
15. Surgical simulation device (1) according to aspect 14, wherein the tendon holder spring connects the housing (11) and the tendon holder (50).
16. Surgical simulation device (1) according to one of the preceding aspects, wherein the device comprises a fluid outlet, the fluid outlet comprising a closure member (81), the closure member (81) including a first end with a sealing plate (82) and a second end with a manual gripping portion and a pivot (84) between the first end and the second end, the closure member (81) being configured to be rotated from a sealing position to an open position by pivoting the closure member (81) about the pivot (84).
17. Surgical simulation device (1) according to one of the preceding aspects, wherein the housing (11) comprises an optically transparent portion.
18. Surgical simulation device (1) according to one of the preceding aspects, wherein the housing (11) comprises a work surface fixation, preferably one or more suction cups, a C-clamp or a height adjustable stand, preferably a metal height adjustable stand.
19. Surgical simulation device (1) comprising a shoulder bone, wherein the shoulder bone is preferably fixated in the bone holder (40).
20. Surgical simulation device (1) according to the preceding aspect, wherein the shoulder bone is an artificial or natural bone, preferably a humerus (43) or acromion (46).
21. Surgical simulation device (1) according to one of the two preceding aspects, wherein the shoulder bone is at least partially covered with a viscoelastic material, in particular gelatin or silicone.
22. Surgical simulation device (1) according to one of the three preceding aspects, wherein the artificial or natural bone comprises one or more holes for attaching a tendon (59).
23. Surgical simulation device (1) according to one of the preceding aspects, wherein the device is configured for simulating a rotator cuff repair.
24. Surgical simulation device (1) according to one of the preceding aspects, wherein one or more portal openings are positioned relative to the bone and the tendon (59) as one or more of: a posterior portal, an anterior portal, a lateral portal, a superolateral portal, an anterolateral, and a posterolateral portal.
25. Surgical simulation device (1) according to one of the preceding aspects, wherein a position of the tendon holder (50) and/or the bone holder (40) in the cavity (15) is adjustable such that the simulated anatomy can be changed.
26. Surgical simulation device (1) according to one of the preceding aspects, wherein the simulator additionally comprises at least one of: an artificial or natural supraspinatus muscle and/or tendon (59), an artificial or natural infraspinatus muscle and/or tendon (59), an artificial or natural teres minor muscle and/or tendon (59) and an artificial or natural subscapularis muscle and/or tendon (59).
27. Use of a surgical simulation device comprising the following steps:
   Providing a surgical simulation device, preferably a simulation device according to one of the preceding aspects;
   Fixating an end of a tendon to a tendon holder with a releasable tendon clamp holding the tendon, the tendon holder being arranged inside a housing of the surgical simulation device, wherein the housing defines a watertight cavity and one or more portal openings for accessing the inside of the cavity arthroscopically; and
   Inserting a liquid into the cavity.

## Claims

1. Surgical simulation device (1) for an arthroscopic shoulder operation comprising:
a housing (11), the housing (11) defining a cavity (15), wherein the cavity (15) is watertight, and the housing (11) comprising one or more portal openings for accessing the inside of the cavity (15) arthroscopically;
a bone holder (40) configured to fixate a shoulder bone in the cavity (15); and
a tendon holder for fixating an end of the tendon to the housing (11), wherein the tendon holder comprises a releasable tendon clamp (51) for holding a tendon.

2. Surgical simulation device according to claim 1, wherein the releasable tendon clamp (51) is biased towards a closed configuration and preferably comprising a spring (56) that biases the clamp (51) towards a closed clamp position.

3. Surgical simulation device (1) according to one of the preceding claims, wherein the clamp (51) comprises a first portion and a second portion,
the first portion including a first clamping surface (53);
the second portion including a second clamping surface (55)
the first and second portions being movable with respect to each other; and
wherein the spring (56) biases the first clamping surface (53) towards the second clamping surface (55) such that the tendon (59) is grasped between the first and the second clamping surface (53, 55).

4. Surgical simulation device (1) according to claim 3, wherein the first portion comprises first guiding surfaces (57) and the second portion includes second guiding surfaces (58), and wherein the first portion and the second portion are configured to move relatively to each other along the guiding surfaces (57, 58), preferably in a linear motion.

5. Surgical simulation device (1) according to one of the preceding claims, wherein the device additionally comprises a liquid container, the liquid container being fluidly connected to a liquid inlet of the housing (11).

6. Surgical simulation device (1) according to one of the preceding claims, wherein the device comprises a pump (130) for pumping liquid into the housing (11).

7. Surgical simulation device according to claim 6, comprising a liquid level sensor configured to sense a level of the liquid in the housing (11) and preferably a pump controller configured to control the level of the liquid in the housing (11), wherein particularly preferred the cavity (15) holds a liquid, and wherein the liquid includes water and is preferably a saline solution.

8. Surgical simulation device (1) according to one of the preceding claims, wherein the device comprises one or more portals (23a-f) and wherein the one or more portals (23a-f) preferably each include a cannula (22).

9. Surgical simulation device (1) according to claim 8, wherein one or more of the portals (23a-f) include a movable portal opening.

10. Surgical simulation device (1) according to one of the preceding claims, wherein the housing (11) includes a base (12) and a top (13) that form the cavity (15), wherein the base (12) and top (13) are preferably rotatably connected with each other via a hinge (16), wherein the base (12) and the top (13) preferably have a closed housing configuration for simulating the arthroscopic shoulder operation and an open housing configuration for directly accessing the tendon (59) and the bone, wherein the base (12) and the top (13) are connected in the closed housing position, forming a tight seal.

11. Surgical simulation device (1) according to one of the preceding claims, additionally comprising a tendon (59), wherein the tendon (59) is an artificial or natural tendon, in particular a natural cadaveric animal or human tendon (59), wherein the artificial tendon is preferably made of gelatin or silicone that is reinforced with a textile mesh.

12. Surgical simulation device (1) according to one of the preceding claims, wherein the device comprises a fluid outlet, the fluid outlet comprising a closure member (81), the closure member (81) including a first end with a sealing plate (82) and a second end with a manual gripping portion and a pivot (84) between the first end and the second end, the closure member (81) being configured to be rotated from a sealing position to an open position by pivoting the closure member (81) about the pivot (84).

13. Surgical simulation device (1) according to one of the preceding claims, wherein the simulator additionally comprises at least one of: an artificial or natural supraspinatus muscle and/or tendon (59), an artificial or natural infraspinatus muscle and/or tendon (59), an artificial or natural teres minor muscle and/or tendon (59) and an artificial or natural subscapularis muscle and/or tendon (59).

14. Surgical simulation device (1) according to one of the preceding claims, wherein the tendon holder (50) is movably arranged within the housing (11) and wherein the surgical simulation device (1) comprises a tendon holder spring, preferably a torsion spring (68), for biasing the tendon holder (50) in a direction away from the shoulder bone, wherein the tendon holder spring preferably connects the housing (11) and the tendon holder (50).

15. Use of a surgical simulation device comprising the following steps:
Providing a surgical simulation device, preferably a simulation device according to one of the preceding claims;
Fixating an end of a tendon to a tendon holder with a releasable tendon clamp holding the tendon, the tendon holder being arranged inside a housing of the surgical simulation device, wherein the housing defines a watertight cavity and one or more portal openings for accessing the inside of the cavity arthroscopically; and
Inserting a liquid into the cavity.
